# EUROPEAN PATENT APPLICATION

(11) **EP 4 471 331 A1**
(43) Date of publication of application: **04.12.2024**
(21) Application number: 24179264.7
(22) Date of filing: 31.05.2024
(51) Int. Cl.: F23D 14/62, C01B 3/24

(54) **METHOD OF MIXING A FUEL WITH AN OXIDANT, AND METHOD OF DECOMPOSING A FEEDSTOCK**

(30) Priority: 02.06.2023 US 202363470718 P
(71) Applicant: Ekona Power Inc., Burnaby, British Columbia, V5A 2H5 (CA)
(72) Inventor: HINKEY, Jr., John Benjamin, Burnaby, V5A 2H5 (CA); KENDRICK, Donald W., Burnaby, V5A 2H5 (CA); AARNIO, Michael John, Burnaby, V5A 2H5 (CA); COLEMAN, Timothy Scott, Burnaby, V5A 2H5 (CA); LEBOE, David Aaron, Burnaby, V5A 2H5 (CA)
(74) Representative: Boult Wade Tennant LLP

(57) **Abstract**

A fuel is mixed with an oxidant to form a first combustible gas mixture having predominantly non-plug flow. The first combustible gas mixture is transitioned into a second combustible gas mixture having predominantly plug flow. The second combustible gas mixture may be combusted to form one or more combustion products. The one or more combustion products may be mixed with a feedstock to cause the feedstock to decompose.

## Description

### Field

The present disclosure relates to fluid mixing and in particular to a method of mixing a fuel with an oxidant, as well as a method of decomposing a feedstock using a fuel mixed with an oxidant.

### Background

Thermal pyrolysis is a method by which a feedstock gas, such as a hydrocarbon, is decomposed without oxygen into its constituent elements (in the case of a hydrocarbon, carbon and hydrogen). The decomposition is triggered by sufficiently raising the temperature of the feedstock gas to a point at which the chemical bonds of the elements of the feedstock gas break down.

Such pyrolysis may be achieved, for example, by bringing the feedstock gas into thermal contact with a hot fluid. At high-enough temperatures, the mixing of the hot fluid with the feedstock gas, and the transfer of thermal energy from the hot fluid to the feedstock gas, is sufficient to cause the feedstock gas to break down and decompose.

One such hot fluid that may be used comprises combustion product gases that are formed as a result of combusting a combustible fuel. For example, a combustible mixture of fuel and an oxidant may be combusted in a combustion chamber connected to a reaction chamber in which is contained the feedstock. Combustion products generated as a result of the combustion may then flow from the combustion chamber to the reaction chamber and mix with the feedstock, to trigger decomposition of the feedstock.

### Summary

According to a first aspect of the disclosure, there is provided a method of mixing a fuel with an oxidant, comprising: mixing the fuel with the oxidant to form a first combustible gas mixture having predominantly non-plug flow; and transitioning the first combustible gas mixture into a second combustible gas mixture having predominantly plug flow.

The method may further comprise: combusting the second combustible gas mixture to form one or more combustion products; and mixing the one or more combustion products with a feedstock contained in a reaction chamber, wherein, as a result of the mixing, energy is transferred from the one or more combustion products to the feedstock and causes the feedstock to decompose.

Mixing the fuel with the oxidant may comprise using one or more of: jet in crossflow mixing; axial swirl mixing; and radial swirl mixing.

Transitioning the first combustible gas mixture into the second combustible gas mixture may comprise flowing the first combustible gas mixture through a flow straightener.

The flow straightener may comprise a wire mesh or a flow diffuser.

The flow straightener may comprise a perforated plate.

The relative diameters and lengths of perforations in the perforated plate may be selected to promote transitioning of one or more non-plug flow characteristics of the first combustible gas mixture into one or more plug flow characteristics.

A ratio of the lengths to the diameters may be at least 1.

The ratio of the lengths to the diameters may be at least 2.5.

Mixing the fuel with the oxidant may comprise: flowing at least one of the fuel and the oxidant through a perforated plate; and after flowing the at least one of the fuel and the oxidant through the perforated plate, mixing the fuel with the oxidant to form the first combustible gas mixture having predominantly non-plug flow.

Mixing the fuel with the oxidant may comprise: flowing either the fuel or the oxidant in an axial direction; and while flowing either the fuel or the oxidant in the axial direction, flowing the other of the fuel and the oxidant in a direction tangential to the axial direction to mix the fuel with the oxidant.

The fuel may comprise non-decomposed feedstock recycled from a previous reaction cycle.

The oxidant may comprise pure oxygen.

The oxidant may comprise air.

The feedstock may comprise a hydrocarbon.

One or more combustion products from a previous reaction cycle may be contained in a combustion chamber connected to the reaction chamber. The method may further comprise flowing the second combustible gas mixture into the combustion chamber and thereby causing the one or more combustion products from the previous reaction cycle to be ejected from the combustion chamber by the second combustible gas mixture.

As a result of the second combustible gas mixture having predominantly plug flow, mixing between the second combustible gas mixture and the one or more combustion products from the previous reaction cycle may be substantially reduced.

The one or more combustion products from the previous reaction cycle may be ejected out of a feedstock reactor that comprises the combustion chamber and the reaction chamber, or are forced into the reaction chamber.

The one or more combustion products from the previous reaction cycle may comprise one or more of: CO₂; CO; N₂; and H₂O.

According to a further aspect of the disclosure, there is provided a system comprising: a feedstock reactor comprising: a mixing portion; a flow-straightening portion connected to the mixing portion; a combustion chamber connected to the flow-straightening portion; and a reaction chamber connected to the combustion chamber; one or more igniters; a controller, comprising circuitry, configured to operate valving, one or more compressors, and the one or more igniters to: introduce a feedstock into the reaction chamber; introduce a fuel and an oxidant into the mixing portion, thereby forming a first combustible gas mixture having predominantly non-plug flow, wherein the first combustible gas mixture then flows through the flow-straightening portion and as a result transitions into a second combustible gas mixture having predominantly plug flow, and wherein the second combustible gas mixture then flows into the combustion chamber; and combust the second combustible gas mixture in the combustion chamber to form one or more combustion products that flow into the reaction chamber and mix with the feedstock, wherein, as a result of the mixing of the one or more combustion products with the feedstock, energy is transferred from the one or more combustion products to the feedstock and causes the feedstock to decompose.

The flow-straightening portion may comprise a flow diffuser for diffusing the first combustible gas mixture.

The flow-straightening portion may comprise a perforated plate or a wire mesh.

This summary does not necessarily describe the entire scope of all aspects. Other aspects, features, and advantages will be apparent to those of ordinary skill in the art upon review of the following description of specific embodiments.

### Drawings

Embodiments of the disclosure will now be described in detail in conjunction with the accompanying drawings of which:
FIG. 1 shows a portion of a feedstock reactor, including a manifold connected to a combustion chamber, for mixing a fuel with an oxidant, according to an embodiment of the disclosure;
FIG. 2 is a schematic diagram of a feedstock reactor according to an embodiment of the disclosure; and
FIGS. 3A-3C show various designs for mixing a fuel with an oxidant, according to embodiments of the disclosure.

### Detailed Description

The present disclosure seeks to provide novel methods of mixing a fuel with an oxidant, and a novel method of decomposing a feedstock using a feedstock reactor. While various embodiments of the disclosure are described below, the disclosure is not limited to these embodiments, and variations of these embodiments may well fall within the scope of the disclosure which is to be limited only by the appended claims.

When combusting a combustible fuel that is to be used as part of a thermal pyrolysis process, the fuel and the oxidant generally need to be thoroughly mixed at a certain stoichiometric ratio. Furthermore, as the mixture is fed into the combustion chamber, the mixture should push out other gases in the combustion chamber (e.g., residual combustion products from a previous reaction cycle) without mixing with such other gases.

Generally, embodiments of the disclosure are directed at a method of mixing a fuel with an oxidant. The fuel is mixed with the oxidant to form a first combustible gas mixture having predominantly non-plug flow behaviour. The first combustible gas mixture may therefore be described as exhibiting "mixed flow". In other words, the fuel and oxidant may be characterized by significant mixing and/or dispersion. The first combustible gas mixture is then transitioned into a second combustible gas mixture having predominantly plug flow. Plug flow is characterized with a flat velocity profile or one-dimensional flow with little to no radial variation. The transition from non-plug flow to plug flow may be achieved by using, for example, a diffuser or flow-straightening vanes.

The method may additionally include combusting the second combustible gas mixture to form one or more combustion products that flow into a reaction chamber and mix with a feedstock contained in the reaction chamber. As a result of the mixing of the one or more combustion products with the feedstock, energy is transferred from the one or more combustion products to the feedstock and causes the feedstock to decompose.

Advantageously, the mixing of the fuel with the oxidant to form the first combustible gas mixture may ensure that the fuel and oxidant are sufficiently well-mixed prior to combustion. In addition, by transitioning the first combustible gas mixture into a second combustible gas mixture having predominantly plug flow, and by flowing the second combustible gas mixture into a combustion chamber, the plug flow character of the second combustible gas mixture may allow for residual gases in the combustion chamber (which may include, for example, residual gases from a previous reaction cycle) to be pushed out of the combustion chamber (e.g., out of the reactor itself, or into the reaction chamber) as the second combustible gas mixture fills the combustion chamber. Furthermore, as a result of the second combustible gas mixture having predominantly plug flow, mixing between the second combustible gas mixture and any residual gases in the combustion chamber may be substantially reduced. For example, any such mixing between the second combustible gas mixture and residual gases in the combustion chamber may be below 5% or more preferably below 1%.

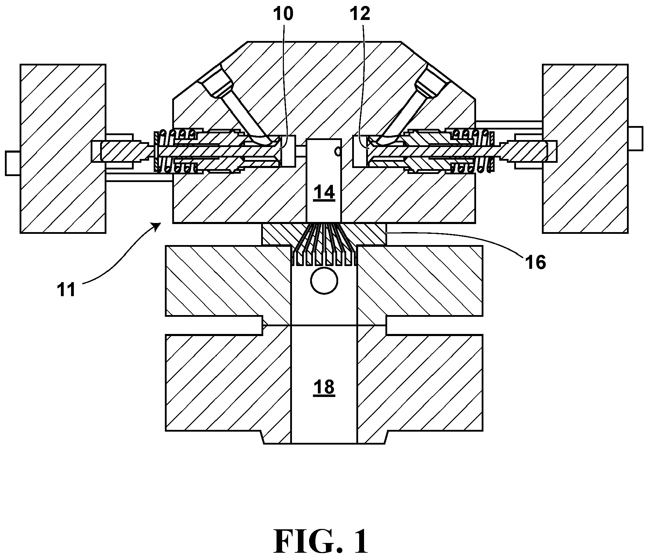

Turning now to FIG. 1, there is shown a portion of a feedstock reactor, including a manifold connected to a combustion chamber, for mixing a fuel with an oxidant, according to an embodiment of the disclosure. As can be seen in FIG. 1, a manifold portion 11 is connected to a combustion chamber 18. Manifold portion 11 comprises at least one fuel valve 10, at least one oxidant valve 12, a mixing portion 14, and a flow straightening portion 16 connected to mixing portion 14 and to combustion chamber 18.

At the beginning of a reaction cycle, mixing portion 14, flow straightening portion 16, and combustion chamber 18 may be filled with one or more residual gases from a previous reaction cycle. Fuel and oxidant valves 10, 12 are opened and the fuel (for example, a hydrocarbon, such as methane) and oxidant (for example, pure oxygen or air) are delivered under pressure and mixed in mixing portion 14 to form a fuel-oxidant mixture having predominantly non-plug flow characteristics.

Mixing of the fuel and oxidant in mixing portion 14 can be achieved by any of numerous configurations of fuel and oxidant valves 10, 12. For example, fuel and oxidant valves 10, 12 may be opposed to one another such that the incoming streams of fuel and oxidant intersect to promote mixing. Additional or alternative mixing strategies may be used, such as jet in crossflow mixing which may be achieved, for example, by using an annular array of circumferentially-arranged apertures. In particular, either the fuel or the oxygen may flow along a longitudinal direction, and the other fluid may be caused to flow through the circumferentially-arranged apertures such that the fluid flowing through the apertures penetrates the longitudinally-flowing stream and mixes therewith.

According to some embodiments, swirl mixing may be used to promote mixing of the fuel and the oxidant. Such mixing may be achieved by using a swirler and/or some other physical feature designed to induce a degree of swirl or rotational motion to the fluids. Such swirl may be induced in either the axial direction, the radial direction, or both. According to some embodiments, the fuel and the oxidant may be mixed in a dedicated mixing zone. According to some embodiments, streamwise vorticity may be induced (for example, by using a lobe mixer such as used in exterior aerodynamic devices) to promote mixing of the two fluids. Such mixing strategies may reduce the mixing scales to more intimately mix the fuel and oxidant. Other examples of mixing techniques include offboard pre-mixing in a distributor (in which case the fuel and oxidant are pre-mixed before entering the manifold) and internal combustor head mixing.

After mixing, the fuel-oxidant mixture then flows to flow straightening portion 16. Flow straightening portion 16 may act as a flow diffuser for diffusing the fuel-oxidant mixture such that the diameter of the diffused flow generally corresponds to the diameter of the inlet to combustion chamber 18. In particular, as can be seen in FIG. 1, the diameter of mixing portion 14 is smaller than that of combustion chamber 18, and flow straightening portion 16 connects the outlet of mixing portion 14 to the inlet of combustion chamber 18, thereby diffusing the fuel-oxidant mixture as a result.

At the outlet of flow straightening portion 16, the fuel-oxidant mixture exits as a mixture having predominantly plug flow characteristics, enabling the fuel-oxidant mixture to push out any residual gases within combustion chamber 18 (e.g., from a previous reaction cycle). As the fuel-oxidant mixture flows from mixing portion 14 to combustion chamber 18 via flow straightening portion 16, any residual gases (e.g., from a previous reaction cycle) in mixing portion 14 are entrained with the fuel-oxidant mixture, together with any residual gases in flow straightening portion 16. Fuel and oxidant valves 10, 12 are then closed once the fuel-oxidant mixture has entered combustion chamber 18 and any residual gases have been pushed out of combustion chamber 18.

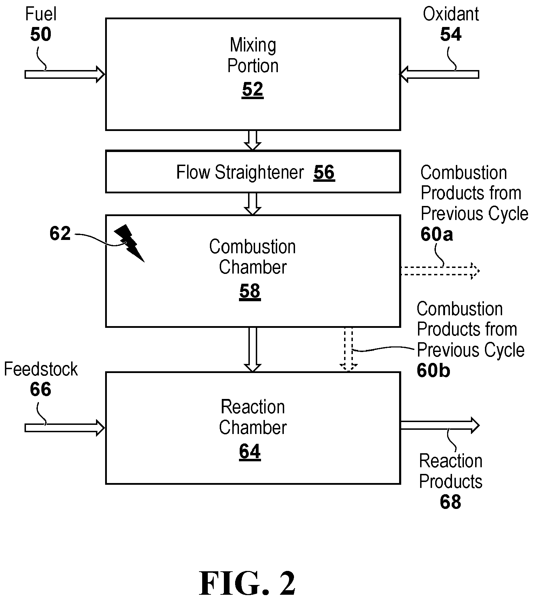

Turning to FIG. 2, there is shown a schematic diagram of a feedstock reactor in which mixing of a fuel and an oxidant may be used as part of a thermal pyrolysis process, according to an embodiment of the disclosure.

A fuel 50 (such as a hydrocarbon, such as methane) and an oxidant 54 (such as pure oxygen or air) are injected under pressure into a mixing portion 52 of the reactor (for example, mixing portion 14 described above in connection with FIG. 1). In addition, a reaction chamber 64 of the reactor is loaded with a feedstock 66 (such as a hydrocarbon, such as methane) that is to be decomposed.

Fuel 50 and oxidant 54 are mixed together within mixing portion 14. Any suitable method of mixing fuel 50 and oxidant 54 may be used, such as any of the ones described above. For example, jet in crossflow mixing, swirl mixing, or radial or axial vorticity may be used. As a result of the mixing of fuel 50 and oxidant 54 in mixing portion 52, a first combustible gas mixture is formed within mixing portion 52, the first combustible gas mixture having predominantly non-plug flow characteristics. For example, the first combustible gas mixture may be characterized by significant mixing and/or dispersion of the fuel and oxidant within the first combustible gas mixture.

The first combustible gas mixture is then passed through a flow straightener 56 into a combustion chamber 58 which is connected to reaction chamber 64 using one or more fluid flow passageways. Flow straightener 56 is configured to transition the first combustible gas mixture into a second combustible gas mixture having predominantly plug flow characteristics. As described above, plug flow may comprise flow with a flat velocity profile or one-dimensional flow with little to no radial variation. Any suitable flow straightener may be used. For example, the first combustible gas mixture may be passed through a perforated plate or wire mesh. In the case of a perforated plate, the relative diameters and lengths of the perforations in the perforated plate may be selected to promote transitioning of one or more non-plug flow characteristics of the first combustible gas mixture into one or more plug flow characteristics. For example, a ratio of the lengths to the diameters may be at least 1, or at least 2.5.

The plug flow nature of the second combustible gas mixture allows the second combustible gas mixture to force out or eject any residual gases remaining with combustion chamber 58 (for example, combustion products from a previous reaction cycle) without substantially mixing with such residual gases. In particular, as can be seen in FIG. 2, the residual gases 60a are either ejected out of combustion chamber 58 (using a suitable exhaust valve, for example), or instead the residual gases 60b are forced out of combustion chamber 58 and into reaction chamber 64 via at least one of the one or more fluid flow passageways.

Once combustion chamber 58 is filled with the second combustible gas mixture, an igniter 62 is triggered to cause combustion of the second combustible gas mixture, forming combustion products that flow under pressure into reaction chamber 64 filled with feedstock 66. Thermal energy is transferred from the combustion products to feedstock 66. Energy is also transferred from the hot combustion products to feedstock 66 via dynamic compression of feedstock 66 as a result of the pressure increasing within reaction chamber 64 in response to the flow of hot, pressurized combustion products into reaction chamber 64. Past a certain point, the increase in the temperature of feedstock 66 is sufficient to drive decomposition or pyrolysis of feedstock 66. In the case of methane, for example, the decomposition takes the following form:

CH₄ + energy → C + 2H₂

The reaction products 68 that are produced by the pyrolysis are then extracted from reaction chamber 64.

According to some embodiments, a portion of reaction products 68 may be recycled back to reaction chamber 64 for future reaction cycles. In the case of methane pyrolysis, reaction products 68 may comprise one or more of hydrogen, nitrogen, and carbon, the unwanted products are primarily carbon dioxide, nitrogen, and water, and the recycled gas mixture comprises primarily unreacted natural gas, hydrogen, nitrogen, and carbon monoxide. Non-decomposed feedstock may be used as the fuel that is provided to mixing portion 52.

Operation of the reactor's various valves may be controlled by a suitable controller (such as a microprocessor) comprising circuitry. The controller (not shown), or some other controller, may control the loading of mixing portion 52 and reaction chamber 64 by controlling valves and compressors or similar devices, for example.

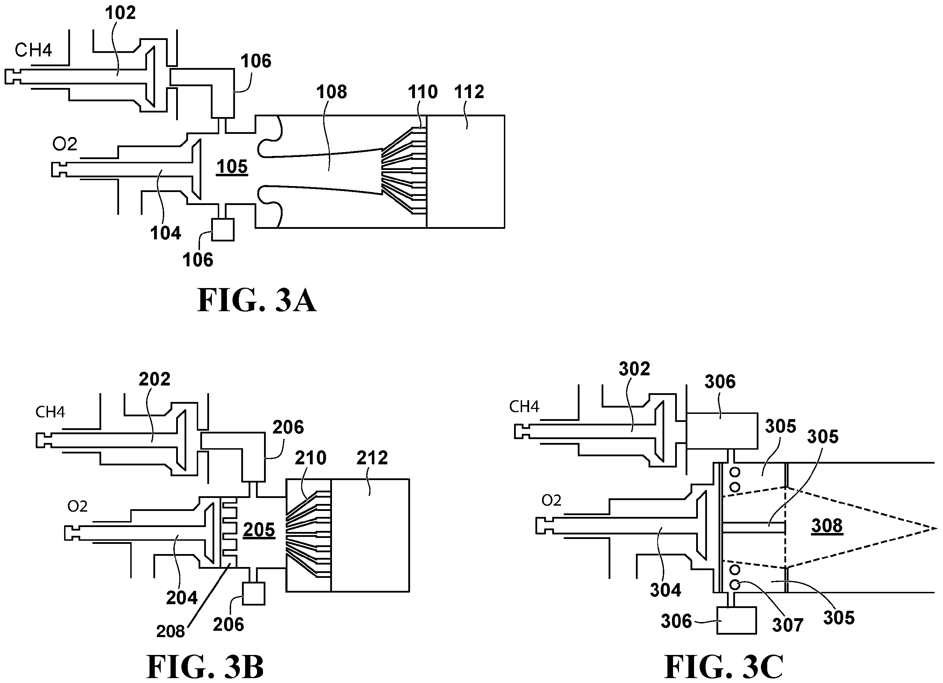

Turning to FIGS. 3A-3C, there are shown examples of different designs that may be used to promote mixing the fuel and the oxidant, and to transition the flow behaviour of the fuel-oxidant mixture from a non-plug flow to a plug flow.

FIG. 3A shows fuel and oxidant valves 102, 104 in an open position to allow the flow of fuel and oxidant into a mixing chamber (or "mixing portion") 105. In particular, oxidant flows generally axially (i.e., in the direction from behind oxidant valve 104 toward combustion chamber 112) while the fuel is configured to mix with the axial flow of oxidant by jet in crossflow mixing. This is achieved by providing a circumferential or annular fuel manifold 106 around mixing chamber 105. The fuel that is introduced into mixing chamber 105 from fuel manifold 106 may therefore penetrate into the stream of oxidant and mix therewith. Downstream of mixing chamber 105 is located a passageway 108 that connects mixing chamber 105 to a flow diffuser 110. Passageway 108 assists in reducing swirl that will have been introduced into the fuel-oxidant mixture as a result the mixing in mixing chamber 105. At the end of passageway 108, the fuel-oxidant mixture enters flow diffuser 110 which performs the dual function of assisting in transitioning the flow of the mixture into a plug flow, and diffusing the flow to a flow having a wider diameter, prior to the mixture entering combustion chamber 112.

FIG. 3B shows fuel and oxidant valves 202, 204 in an open position to allow the flow of fuel and oxidant into a mixing chamber (or "mixing portion") 205. In particular, oxidant flows generally axially (i.e., in the direction from behind oxidant valve 204 combustion chamber 212) while the fuel is configured to mix with the axial flow of oxidant by jet in crossflow mixing. This is achieved by providing a circumferential or annular fuel manifold 206 around mixing chamber 205. The fuel that is introduced into mixing chamber 205 from fuel manifold 206 may therefore penetrate into the stream of oxidant and mix therewith.

In the design shown in FIG. 3B, before the oxidant enters mixing chamber 205, the oxidant passes through a perforated plate 208 that introduces uniformity to the flow of oxidant entering mixing chamber 205. After the fuel and oxidant are mixed in mixing chamber 205, the mixture enters flow diffuser 210 which performs the dual function of assisting in transitioning the flow of the mixture into a plug flow, and diffusing the flow to a flow having a wider diameter, prior to the mixture entering combustion chamber 212. Without perforated plate 208, there is an increased risk that the resulting flow of oxidant and fuel within mixing chamber 205 would preferentially feed the outer holes of flow diffuser 210 because of the pressure drop produced as the oxidant flows past oxidant valve 204.

In the design shown in FIG. 3C, the fuel manifold 306 is fluidly connected to the hollow interior of radial vanes 305 that extend from a body 308. Holes 307 are provided in radial vanes 305 and allow the fuel to exit radial vanes 305 in a direction tangential to the longitudinal axis of body 308 (i.e., into / out of the page). This improves the mixing of the fuel and the oxidant, while also reducing any swirl in the oxidant which has been induced as a result of the pressure drop produced as the oxidant flows past oxidant valve 304. This reduction of swirl may assist in transitioning the flow of the mixture into a plug flow. A perforated plate / flow diffuser may additionally be provided downstream of body 308 to further assist in transitioning the flow of the mixture into a plug flow.

The word "a" or "an" when used in conjunction with the term "comprising" or "including" in the claims and/or the specification may mean "one", but it is also consistent with the meaning of "one or more", "at least one", and "one or more than one" unless the content clearly dictates otherwise. Similarly, the word "another" may mean at least a second or more unless the content clearly dictates otherwise.

The terms "coupled", "coupling" or "connected" as used herein can have several different meanings depending on the context in which these terms are used. For example, as used herein, the terms coupled, coupling, or connected can indicate that two elements or devices are directly connected to one another or connected to one another through one or more intermediate elements or devices via a mechanical element depending on the particular context. The term "and/or" herein when used in association with a list of items means any one or more of the items comprising that list.

As used herein, a reference to "about" or "approximately" a number or to being "substantially" equal to a number means being within +/- 10% of that number.

Use of language such as "at least one of X, Y, and Z," "at least one of X, Y, or Z," "at least one or more of X, Y, and Z," "at least one or more of X, Y, and/or Z," or "at least one of X, Y, and/or Z," is intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

While the disclosure has been described in connection with specific embodiments, it is to be understood that the disclosure is not limited to these embodiments, and that alterations, modifications, and variations of these embodiments may be carried out by the skilled person without departing from the scope of the disclosure.

It is furthermore contemplated that any part of any aspect or embodiment discussed in this specification can be implemented or combined with any part of any other aspect or embodiment discussed in this specification.

## Claims

1. A method of mixing a fuel with an oxidant, comprising:
mixing the fuel with the oxidant to form a first combustible gas mixture having predominantly non-plug flow; and
transitioning the first combustible gas mixture into a second combustible gas mixture having predominantly plug flow.

2. The method of claim 1, further comprising:
combusting the second combustible gas mixture to form one or more combustion products; and
mixing the one or more combustion products with a feedstock contained in a reaction chamber, wherein, as a result of the mixing, energy is transferred from the one or more combustion products to the feedstock and causes the feedstock to decompose.

3. The method of claim 1 or 2, wherein mixing the fuel with the oxidant comprises using one or more of:
jet in crossflow mixing;
axial swirl mixing; and
radial swirl mixing.

4. The method of any one of claims 1-3, wherein transitioning the first combustible gas mixture into the second combustible gas mixture comprises flowing the first combustible gas mixture through a flow straightener.

5. The method of claim 4, wherein the flow straightener comprises a wire mesh, a flow diffuser, or a perforated plate.

6. The method of any one of claims 1-5, wherein mixing the fuel with the oxidant comprises:
flowing either the fuel or the oxidant in an axial direction; and
while flowing either the fuel or the oxidant in the axial direction, flowing the other of the fuel and the oxidant in a direction tangential to the axial direction to mix the fuel with the oxidant.

7. The method of any one of claims 1-6, wherein mixing the fuel with the oxidant comprises:
flowing at least one of the fuel and the oxidant through a perforated plate; and
after flowing the at least one of the fuel and the oxidant through the perforated plate, mixing the fuel with the oxidant to form the first combustible gas mixture having predominantly non-plug flow.

8. The method of claim 2, wherein the fuel comprises non-decomposed feedstock recycled from a previous reaction cycle.

9. The method of claim 2, wherein:
one or more combustion products from a previous reaction cycle are contained in a combustion chamber connected to the reaction chamber; and
the method further comprises flowing the second combustible gas mixture into the combustion chamber and thereby causing the one or more combustion products from the previous reaction cycle to be ejected from the combustion chamber by the second combustible gas mixture.

10. The method of claim 9, wherein, as a result of the second combustible gas mixture having predominantly plug flow, mixing between the second combustible gas mixture and the one or more combustion products from the previous reaction cycle is substantially reduced.

11. The method of claim 9 or 10, wherein the one or more combustion products from the previous reaction cycle are ejected out of a feedstock reactor that comprises the combustion chamber and the reaction chamber, or are forced into the reaction chamber.

12. The method of any one of claims 9-11, wherein the one or more combustion products from the previous reaction cycle comprise one or more of: CO₂; CO; N₂; and H₂O.

13. A system comprising:
a feedstock reactor comprising:
a mixing portion;
a flow-straightening portion connected to the mixing portion;
a combustion chamber connected to the flow-straightening portion; and
a reaction chamber connected to the combustion chamber;
one or more igniters;
a controller, comprising circuitry, configured to operate valving, one or more compressors, and the one or more igniters to:
introduce a feedstock into the reaction chamber;
introduce a fuel and an oxidant into the mixing portion, thereby forming a first combustible gas mixture having predominantly non-plug flow, wherein the first combustible gas mixture then flows through the flow-straightening portion and as a result transitions into a second combustible gas mixture having predominantly plug flow, and wherein the second combustible gas mixture then flows into the combustion chamber; and
combust the second combustible gas mixture in the combustion chamber to form one or more combustion products that flow into the reaction chamber and mix with the feedstock, wherein, as a result of the mixing of the one or more combustion products with the feedstock, energy is transferred from the one or more combustion products to the feedstock and causes the feedstock to decompose.

14. The system of claim 13, wherein the flow-straightening portion comprises a flow diffuser for diffusing the first combustible gas mixture.

15. The system of claim 13 or 14, wherein the flow-straightening portion comprises a perforated plate or a wire mesh.

## Amended claims

### Amended claims in accordance with Rule 137(2) EPC.

1. A method of mixing a fuel (50) with an oxidant (54), comprising:
mixing the fuel with the oxidant to form a first combustible gas mixture having predominantly non-plug flow;
transitioning the first combustible gas mixture into a second combustible gas mixture having predominantly plug flow;
combusting the second combustible gas mixture to form one or more combustion products; and
mixing the one or more combustion products with a feedstock (66) contained in a reaction chamber (64), wherein, as a result of the mixing, energy is transferred from the one or
more combustion products to the feedstock and causes the feedstock to decompose.

2. The method of claim 1, wherein mixing the fuel with the oxidant comprises using one or more of:
jet in crossflow mixing;
axial swirl mixing; and
radial swirl mixing.

3. The method of claim 1 or 2, wherein transitioning the first combustible gas mixture into the second combustible gas mixture comprises flowing the first combustible gas mixture through a flow straightener (56).

4. The method of claim 3, wherein the flow straightener comprises a wire mesh, a flow diffuser (210), or a perforated plate (208).

5. The method of any one of claims 1-4, wherein mixing the fuel with the oxidant comprises:
flowing either the fuel or the oxidant in an axial direction; and
while flowing either the fuel or the oxidant in the axial direction, flowing the other of the fuel and the oxidant in a direction tangential to the axial direction to mix the fuel with the oxidant.

6. The method of any one of claims 1-5, wherein mixing the fuel with the oxidant comprises:
flowing at least one of the fuel and the oxidant through a perforated plate (208); and
after flowing the at least one of the fuel and the oxidant through the perforated plate,
mixing the fuel with the oxidant to form the first combustible gas mixture having predominantly non-plug flow.

7. The method of any one of claims 1-6, wherein the fuel comprises non-decomposed feedstock recycled from a previous reaction cycle.

8. The method of any one of claims 1-7, wherein:
one or more combustion products (60a, 60b) from a previous reaction cycle are contained in a combustion chamber (58) connected to the reaction chamber; and
the method further comprises flowing the second combustible gas mixture into the combustion chamber and thereby causing the one or more combustion products from the previous reaction cycle to be ejected from the combustion chamber by the second combustible gas mixture.

9. The method of claim 8, wherein, as a result of the second combustible gas mixture having predominantly plug flow, mixing between the second combustible gas mixture and the one or more combustion products from the previous reaction cycle is substantially reduced.

10. The method of claim 8 or 9, wherein the one or more combustion products from the previous reaction cycle are ejected out of a feedstock reactor that comprises the combustion chamber and the reaction chamber, or are forced into the reaction chamber.

11. The method of any one of claims 8-10, wherein the one or more combustion products from the previous reaction cycle comprise one or more of: CO₂; CO; N₂; and H₂O.

12. A system comprising:
a feedstock reactor comprising:
a mixing portion (52);
a flow-straightening portion (56) connected to the mixing portion;
a combustion chamber (58) connected to the flow-straightening portion; and
a reaction chamber (64) connected to the combustion chamber;
one or more igniters (62);
a controller, comprising circuitry, configured to operate valving, one or more compressors, and the one or more igniters to:
introduce a feedstock (66) into the reaction chamber;
introduce a fuel (50) and an oxidant (54) into the mixing portion, thereby forming a first combustible gas mixture having predominantly non-plug flow, wherein the first combustible gas mixture then flows through the flow-straightening portion and as a result transitions into a second combustible gas mixture having predominantly plug flow, and wherein the second combustible gas mixture then flows into the combustion chamber; and
combust the second combustible gas mixture in the combustion chamber to form one or more combustion products that flow into the reaction chamber and mix with the feedstock, wherein, as a result of the mixing of the one or more combustion products with the feedstock, energy is transferred from the one or
more combustion products to the feedstock and causes the feedstock to decompose.

13. The system of claim 12, wherein the flow-straightening portion comprises a flow diffuser (210) for diffusing the first combustible gas mixture.

14. The system of claim 12 or 13, wherein the flow-straightening portion comprises a perforated plate(208).

15. The system of claim 12 or 13, wherein the flow-straightening portion comprises a wire mesh.
